# EUROPEAN PATENT APPLICATION

(11) **EP 3 382 256 A1**
(43) Date of publication of application: **03.10.2018**
(21) Application number: 16868191.4
(22) Date of filing: 16.11.2016
(51) Int. Cl.: F16L 59/065, F25D 23/06

(54) **VACUUM HEAT INSULATOR; AND HEAT-INSULATING CONTAINER, HEAT-INSULATING WALL, AND REFRIGERATOR USING SAME**

(30) Priority: 25.11.2015 JP 2015229238
(71) Applicant: Panasonic Intellectual Property Management Co., Ltd., Osaka-shi, Osaka 540-6207 (JP)
(72) Inventor: HIRANO, Toshiaki, Osaka 540-6207 (JP); KAWARAZAKI, Hideji, Osaka 540-6207 (JP); KITANO, Tomoaki, Osaka 540-6207 (JP)
(74) Representative: Eisenführ Speiser
(86) International application number: PCT/JP2016/004894
(87) International publication number: WO 2017/090240

(57) **Abstract**

Vacuum heat insulator (13) is enclosed by an outer package having a high oxygen gas barrier property. The outer package includes oxygen gas barrier layer (31) as an innermost layer. Oxygen gas barrier layer (31) is not exposed to the atmosphere and is not deteriorated by gas absorption, to achieve a high oxygen gas barrier property continuously for a long period of time.

## Description

### TECHNICAL FIELD

The present invention relates to a vacuum heat insulator, and a heat-insulating container, a heat-insulating wall, and a refrigerator including the vacuum heat insulator.

### BACKGROUND ART

Energy saving has recently been highly demanded for prevention of global warming, and household electric appliances have also been required to urgently achieve energy saving. Heat/cold insulation equipment such as refrigerators, freezers, and vending machines is particularly required to include a highly heat-insulating material for efficient use of heat.

Typical examples of the heat-insulating material include a fibrous material like glass wool and a foamed body like urethane foam. These heat-insulating materials need to be increased in thickness for improvement in heat insulation performance. None of these heat-insulating materials will thus be applicable with limitation in space to be filled with a heat-insulating material.

There is proposed a vacuum heat-insulating material as a heat-insulating material of higher efficiency. The vacuum heat-insulating material includes a core serving as a spacer, and an outer package having a gas barrier property. The core is inserted to the outer package having a decompressed interior and being sealed.

The vacuum heat-insulating material exhibits heat insulation performance about 20 times as high as heat insulation performance of urethane foam, and excellently achieves satisfactory heat insulation performance even when the vacuum heat-insulating material is decreased in thickness.

The vacuum heat-insulating material thus attracts attention as a material fulfilling customers' demands for increase in internal volume of a heat-insulating box body and effectively achieving energy saving through improvement in heat insulation performance.

A refrigerator or the like includes a heat-insulating box body configuring a refrigerator body and having an inner box and an outer box. The inner box and the outer box interpose a heat-insulating space that is filled with foamed urethane foam and contains a vacuum heat-insulating material. Such a configuration achieves improvement in heat insulation of the heat-insulating box body as well as increase in internal volume of the heat-insulating box body.

In a case where a refrigerator or the like includes a vacuum heat-insulating material, the refrigerator includes a heat-insulating box body having a heat-insulating space typically in a complex shape. The vacuum heat-insulating material has an area of a limited ratio to an area of the vacuum heat-insulating material covering the heat-insulating box body, in other words, an entire heat transfer area of the heat-insulating box body.

There has thus been proposed a technique of providing a heat-insulating box body serving as a vacuum heat-insulating material, by filling a heat-insulating space of the heat-insulating box body with foamed open cell urethane foam through an air inlet port for blow molding the heat-insulating box body and subsequently exhausting the interior of the heat-insulating box body with use of a vacuum exhauster connected to the air inlet port (see PTL 1 or the like).

There is also proposed a method of preparing a multilayer sheet including an ethylene-vinyl alcohol copolymer (EVOH) having an excellent oxygen gas barrier property in accordance with a coextrusion method or the like, blow molding or vacuum molding the multilayer sheet into a container shape, and decompressing and sealing the container to preserve a content of the container for a long period of time (see PTL 2 or the like as to a container obtained by blow molding, and see PTL 3 or the like as to a container obtained by vacuum molding).

There is also proposed a material that has small thickness and exhibits a high oxygen gas barrier property, examples of which include a thin EVOH layer having an inorganic material like Al, Al₂O₃, or SiO₂ vapor deposited on the EVOH layer (see PTL 4 or the like).

These techniques effectively achieve improvement in oxygen gas barrier property, as well as improvement in heat resistance, shielding radiant heat, improvement in water vapor barrier property and in pinhole property, and the like.

Application of any one of these techniques to an outer package made of a vacuum heat-insulating material requires an extraordinary high degree of vacuum. Furthermore, an extraordinary high oxygen gas barrier property is required for continuous exhibition of heat insulation performance for ten or more years. Application of the EVOH layer or the like thus problematically requires extremely large thickness of 300 µm or more as well as high material and production costs.

A conventional gas barrier coating layer is made of a polyvinyl alcohol polymer (PVA) or an EVOH resin. These materials exhibit a high moisture absorption property and thus deteriorate in oxygen gas barrier property by gradually absorbing moisture while in contact with the atmosphere.

PTL 5 discloses details of open cell urethane foam to be applied as a heat-insulating material.

### Citation List

### Patent Literatures

PTL 1: Unexamined Japanese Patent Publication No. 9-119771
PTL 2: Japanese Patent No. 1467965
PTL 3: Japanese Patent No. 1883267
PTL 4: Japanese Patent No. 4642265
PTL 5: Japanese Patent No. 5310928

### SUMMARY OF THE INVENTION

The present invention has been made in view of the above conventional problems, and provides a vacuum heat insulator that is prepared at an inexpensive cost and continuously exhibits heat insulation performance for a long period of time.

Specifically, a vacuum heat insulator according to an exemplary embodiment of the present disclosure includes: an outer package having an enclosed structure; and a core provided in the outer package. The outer package has an interior decompressed and an oxygen gas barrier layer as an innermost layer.

Such a configuration allows the oxygen gas barrier layer to be disposed in the vacuum heat insulator and be exposed to a vacuum space in the outer package provided with little residual gas, without being exposed to the atmosphere. This configuration thus prevents deterioration due to gas absorption and continuously exhibits a high oxygen gas barrier property for a long period of time. This leads to a continuously high degree of vacuum and continuously high heat insulation performance for a long period of time.

The oxygen gas barrier layer typically has oxygen permeability equal to or less than 10 cc/m²·day·atm (at 20°C and 65%RH).

In the vacuum heat insulator according to an exemplary embodiment of the present disclosure, the oxygen gas barrier layer is optionally configured by a PVA layer or an EVOH layer.

In such a configuration, the PVA layer or the EVOH layer serving as the oxygen gas barrier layer in the vacuum heat insulator is not exposed to the atmosphere but is exposed to the vacuum space including little moisture and the like. The PVA layer or the EVOH layer, which tends to deteriorate through absorbing moisture, is thus less likely to deteriorate. This configuration thus keeps a high oxygen gas barrier property for a long period of time. This leads to a continuously low degree of vacuum and thus continuously high heat insulation performance for a long period of time. The oxygen gas barrier layer is obtained through coating without coextrusion molding with use of large-scale multilayer sheet production equipment, thus enables reduction in production cost.

In the vacuum heat insulator according to an exemplary embodiment of the present disclosure, the oxygen gas barrier layer is optionally made of oxygen gas barrier resin including a PVA layer or an EVOH layer, and a composite material including an inorganic material.

In such a configuration, oxygen permeability of an inorganic layer made of the inorganic material is extraordinarily lower than oxygen permeability of a single layer made of the oxygen gas barrier resin. This configuration thus achieves higher oxygen gas barrier performance in comparison to a case where the oxygen gas barrier layer is configured by the single layer made of the oxygen gas barrier resin. The oxygen gas barrier layer is not limited to having a multilayer structure obtained by stacking the composite material including the inorganic material and the oxygen gas barrier resin including the PVA layer or the EVOH layer. For example, an oxygen gas barrier layer having a single-layer structure, which includes an oxygen gas barrier resin layer having the PVA layer or the EVOH layer and a uniformly dispersed inorganic material, achieves higher oxygen gas barrier performance in comparison to the oxygen gas barrier layer configured by the single oxygen gas barrier resin layer. The oxygen gas barrier layer further achieves reduction in thickness and reduction in material cost due to improvement in oxygen gas barrier performance.

In the vacuum heat insulator according to an exemplary embodiment of the present disclosure, the outer package is optionally configured by a resin molded body.

A conventional vacuum heat insulator is configured by a resin film including metal foil or a metal film, and is thus formed only into a plate shape or a shape obtained by combining these films with poor moldability. The outer package is configured by the resin molded body, so that the vacuum heat insulator can be tightly filled in a portion to be heat insulated with higher shaping flexibility. A refrigerator or a heat-insulating container including a heat-insulating wall provided with the vacuum heat insulator according to the present disclosure thus entirely achieves highly efficient heat insulation with small heat leakage.

In the vacuum heat insulator according to an exemplary embodiment of the present disclosure, the outer package optionally includes an adhesive resin layer that has a functional group exhibiting adhesion improved by affinity with the oxygen gas barrier resin.

Such a configuration prevents the oxygen gas barrier layer from being peeled off from the outer package by external force particularly in a heating and drying, pressurization welding, or assembling step during production, to improve yield of the production. This achieves improvement in productivity of the vacuum heat insulator for reduction in production cost.

In the vacuum heat insulator according to an exemplary embodiment of the present disclosure, the oxygen gas barrier layer optionally includes at least two stacked oxygen gas barrier layers. The plurality of oxygen gas barrier layers includes a first one of the oxygen gas barrier layers formed through coating or the like and a second one of the oxygen gas barrier layers formed by inserting a vacuum molded sheet made of EVOH or the like to the outer package being injection molded. Such a configuration achieves compensation of deterioration in gas barrier property due to any defective pinhole, crack, or the like.

In the vacuum heat insulator according to an exemplary embodiment of the present disclosure, the oxygen gas barrier layer is optionally 1 µm to 50 µm in thickness.

In such a configuration, the oxygen gas barrier layer continuously achieves, with thickness from 1 µm to 50 µm, an oxygen gas barrier property equivalent to the oxygen gas barrier property achieved by a conventional oxygen gas barrier layer configured by a single EVOH layer and having thickness equal to or more than 300 µm. This configuration thus achieves significant reduction in material cost.

In the vacuum heat insulator according to an exemplary embodiment of the present disclosure, the outer package optionally includes at least one of an air absorbent or a moisture absorbent.

An oxygen gas barrier layer having oxygen permeability not exceeding 0.1 cc/m²·day·atm (at 20°C and 65%RH) or the like may still possibly have gradual increase in internal pressure of a vacuum heat insulator when achieving continuous heat insulation performance for ten or more years. This can be prevented by preliminary provision, in the vacuum heat insulator, of an absorbent that absorbs air, moisture, or the like included in outside air entering the vacuum heat insulator, by an amount achieving expected continuous heat insulation performance, for inhibition of deterioration in heat insulation performance due to increase in internal pressure.

A heat-insulating container according to an exemplary embodiment of the present disclosure includes the vacuum heat insulator having any one of the above configurations. The heat-insulating container including the vacuum heat insulator according to the present disclosure is less expensive and achieves continuous heat insulation performance for a long period of time. Examples of the heat-insulating container include a liquefied natural gas (LNG) vessel tank, a housing of a portable cooling box, a housing of a constant-temperature oven, and a housing of a hot water tank.

A heat-insulating wall according to an exemplary embodiment of the present disclosure includes the vacuum heat insulator having any one of the above configurations. The heat-insulating wall including the vacuum heat insulator according to the present disclosure is less expensive and achieves continuous heat insulation performance for a long period of time.

A refrigerator according to an exemplary embodiment of the present disclosure includes the vacuum heat insulator having any one of the above configurations. The refrigerator including the vacuum heat insulator according to the present disclosure is less expensive and achieves continuous heat insulation performance for a long period of time.

Examples of the refrigerator provided with the vacuum heat insulator having any one of the above configurations include a refrigerator provided with a substantially flat refrigerator door or the like and including the vacuum heat insulator according to the present disclosure.

### BRIEF DESCRIPTION OF DRAWINGS

FIG. 1 is a sectional view of a refrigerator including a vacuum heat insulator according to a first exemplary embodiment of the present disclosure.
FIG. 2 is an enlarged perspective view of part of a refrigerator door including the vacuum heat insulator according to the first exemplary embodiment of the present disclosure.
FIG. 3Ais a sectional view taken along line 3A-3A indicated in FIG. 2, of the refrigerator door.
FIG. 3B is a sectional view taken along line 3B-3B indicated in FIG. 3A.
FIG. 4A is a sectional view taken along line 4A-4A indicated in FIG. 2, of a different type of refrigerator door.
FIG. 4B is a sectional view taken along line 4B-4B indicated in FIG. 4A.
FIG. 5A is a sectional view taken along line 5A-5A indicated in FIG. 2, of a still different type of refrigerator door.
FIG. 5B is a sectional view taken along line 5B-5B indicated in FIG. 5A.
FIG. 6 is a flowchart of a method of producing the refrigerator door according to the first exemplary embodiment of the present disclosure.
FIG. 7 is a graph indicating relation between thickness and oxygen permeability of an oxygen gas barrier layer of the vacuum heat insulator according to the first exemplary embodiment of the present disclosure.
FIG. 8 is a graph indicating fracture stress of the vacuum heat insulator according to the first exemplary embodiment of the present disclosure.
FIG. 9 is a graph indicating transition of internal pressure at high-temperature high-humidity testing, of the vacuum heat insulator according to the first exemplary embodiment of the present disclosure.
FIG. 10 is a graph indicating transition of thermal conductivity at high-temperature testing in a second exemplary embodiment of the present disclosure.

### DESCRIPTION OF EMBODIMENTS

Exemplary embodiments of the present disclosure will now be described below with reference to the drawings. The present invention is not limited to the exemplary embodiments.

### (First exemplary embodiment)

### [Exemplary structure of refrigerator door]

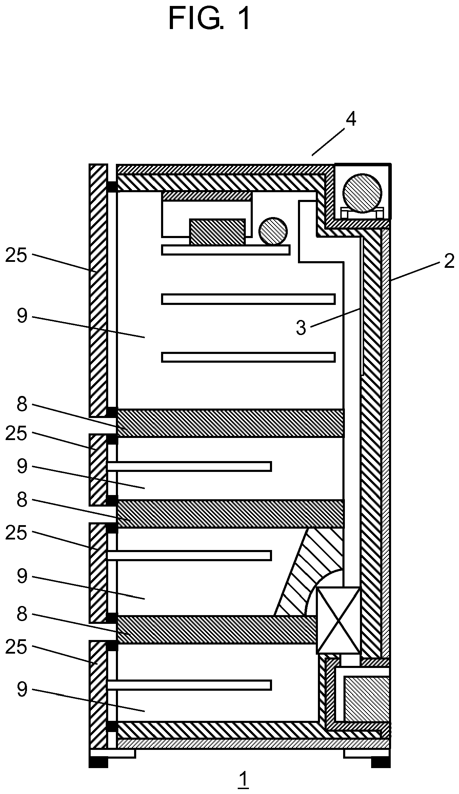

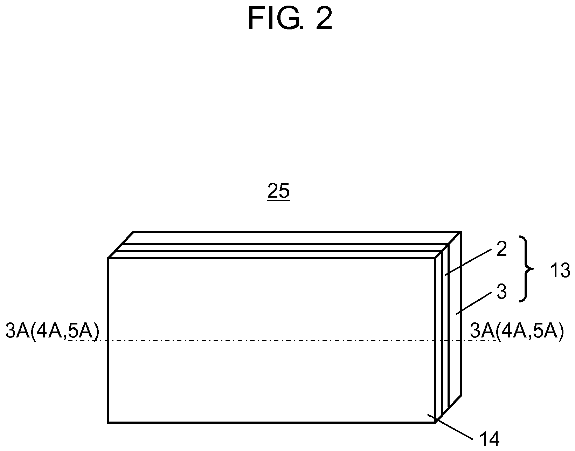

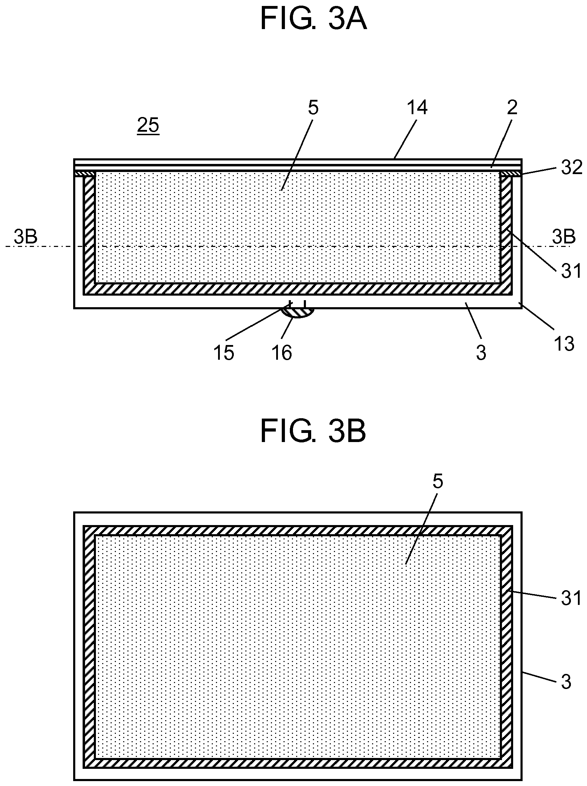

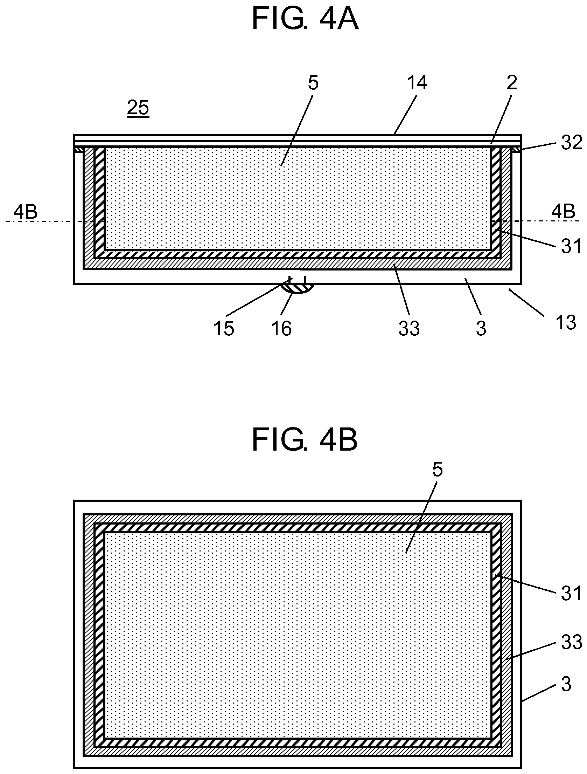

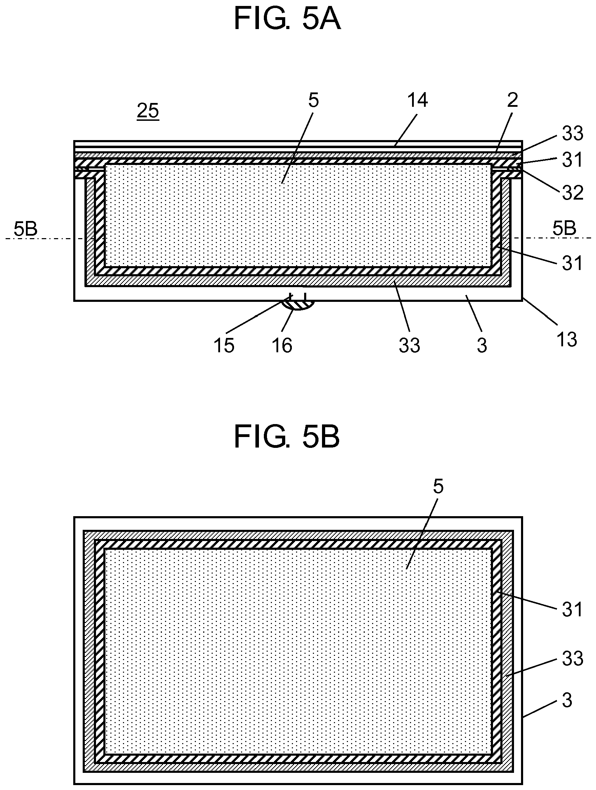

FIG. 1 is a sectional view of a refrigerator including a vacuum heat insulator according to a first exemplary embodiment of the present disclosure. FIG. 2 is an enlarged perspective view of part of a refrigerator door including the vacuum heat insulator according to the first exemplary embodiment of the present disclosure. FIG. 3A is a sectional view taken along line 3A-3A indicated in FIG. 2, of the refrigerator door, and FIG. 3B is a sectional view taken along line 3B-3B indicated in FIG. 3A. FIG. 4A is a sectional view taken along line 4A-4A indicated in FIG. 2, of a different type of refrigerator door, and FIG. 4B is a sectional view taken along line 4B-4B indicated in FIG. 4A. FIG. 5A is a sectional view taken along line 5A-5A indicated in FIG. 2, of a still different type of refrigerator door, and FIG. 5B is a sectional view taken along line 5B-5B indicated in FIG. 5A.

FIG. 1 depicts refrigerator 1 according to the first exemplary embodiment of the present disclosure including refrigerator body 4 having a plurality of storage chambers 9 partitioned by partition plates 8. Refrigerator 1 further includes refrigerator doors 25 configured to freely open and close openings of the plurality of storage chambers 9.

As depicted in FIG. 2, refrigerator doors 25 each include vacuum heat insulator 13 and exterior component 14 to be described later.

Vacuum heat insulator 13 includes an outer package having outer box 2 and inner box 3, and open cell urethane foam 5 (a core of the vacuum heat insulator) filled in a heat-insulating space provided between outer box 2 and inner box 3.

Outer box 2 has surfaces at least one of which is provided with exterior component 14 such as a glass plate or a metal plate.

Inner box 3 includes oxygen gas barrier layer 31. Oxygen gas barrier layer 31 is preferred to configure an innermost layer of inner box 3. Providing an antimicrobial coating layer or the like at least partially inside oxygen gas barrier layer 31 so as not to deteriorate gas barrier performance of oxygen gas barrier layer 31 is also regarded as providing oxygen gas barrier layer 31 as the innermost layer of inner box 3 in the present disclosure.

The outer package configured by outer box 2 and inner box 3 surrounds outer surfaces of open cell urethane foam 5.

As described above, vacuum heat insulator 13 includes the core (open cell urethane foam 5 according to the present exemplary embodiment) serving as a spacer, and the outer package (including outer box 2 and inner box 3 in the present exemplary embodiment) having the gas barrier property, and is obtained by inserting the core to the outer package, decompressing the interior of the outer package, and sealing the outer package. Outer box 2 and inner box 3 have peripheries joined by heat welding layer 32 and sealed.

As depicted in FIG. 3A, inner box 3 has exhaust port 15 allowing exhaust ventilation of the interior of the outer package through exhaust pipe 16 with use of a vacuum pump. The outer package is sealed after the interior of the outer package is vacuum exhausted. Open cell urethane foam 5 has fine air vents of 2 µm to 30 µm. Exhaust port 15 is sealed in completed refrigerator door 25 including vacuum heat insulator 13.

FIG. 4A and FIG. 4B depict different exemplary refrigerator door 25 including vacuum heat insulator 13 that includes inner box 3 and oxygen gas barrier layer 31 interposing surface preparation layer 33. Surface preparation layer 33 corresponds to an adhesive resin layer (adhesive layer).

FIG. 5Aand FIG. 5B depict still different exemplary refrigerator door 25 including vacuum heat insulator 13 in which oxygen gas barrier layer 31 is provided as an innermost layer of outer box 2 and heat welding layer 32 at the peripheries of outer box 2 and inner box 3 is also provided with oxygen gas barrier layer 31.

In other words, oxygen gas barrier layer 31 can be provided as the entire innermost layer of the outer package, or can be provided as the at least partial innermost layer of the outer package.

### [Exemplary production method]

Described next is a method of producing refrigerator door 25 including vacuum heat insulator 13 according to the first exemplary embodiment of the present disclosure.

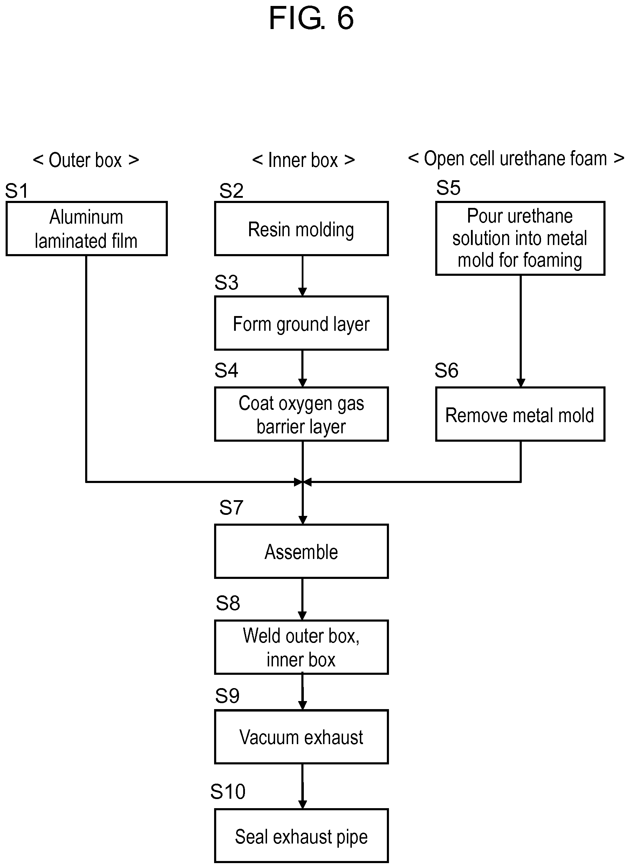

FIG. 6 is a flowchart of a method of producing the refrigerator door according to the first exemplary embodiment of the present disclosure.

### [Outer box]

In step S1, outer box 2 is formed with use of an aluminum laminated film. Outer box 2 is made of a material having a high oxygen gas barrier property. Outer box 2 of refrigerator door 25 has a substantially flat shape, and is thus made of a resin laminated film or sheet including a metal layer of aluminum, stainless steel, or the like.

Specifically, outer box 2 includes an outer layer made of polyethylene terephthalate or the like as a protective material, and an intermediate layer made of aluminum foil or the like as a gas barrier material. Outer box 2 further includes an inner layer made of a laminated film or sheet having a non-stretched polypropylene layer (CPP) or the like in a case where inner box 3 has an adhesive layer made of polypropylene.

In another case where the adhesive layer of inner box 3 is configured by a gas barrier coating layer, an adhesive layer is selected in accordance with a functional group of the gas barrier coating layer. An ethylene copolymer having a carboxyl group is selected for metal such as Al. Specifically, the adhesive layer is made of an ethylene-methacrylic acid copolymer or the like. A polyolefin resin having a functional group such as an OH group of high polarity is selected for EVOH. Specifically, the adhesive layer is made of modified polyolefin or the like.

After inner box 3 and outer box 2 are heat welded, inner box 3 is cut to be sized as large as outer box 2 and is molded.

### [Inner box]

In step S2, inner box 3 is resin molded. Specific examples of the resin molding include vacuum molding, pressure forming, and blow molding as molding with use of a material having low water vapor permeability such as polypropylene or polyethylene. In a case where inner box 3 needs to have strength as in refrigerator door 25 according to the present exemplary embodiment, inner box 3 is preferably obtained by injection molding with use of polypropylene. Inner box 3 is made of a material having a high oxygen gas barrier property and a high water vapor barrier property to principally inhibit permeation of air and water vapor.

Subsequently in step S3, a ground layer is formed for higher adhesion with a material having low oxygen permeability. A polyolefin-based material such as polypropylene or polyethylene mentioned above does not include a highly reactive functional group. There has conventionally been proposed a technique of executing corona discharge treatment, plasma radiation treatment, or primer agent application for higher adhesion with a coating material, a vapor deposition material, or the like.

Inner box 3 according to the present exemplary embodiment is injection molded to have a complexly uneven shape. The inventors have found through diligent examination that inner box 3 having such a complex shape is most effectively and most appropriately treated for higher adhesion with a coating material, a vapor deposition material, or the like, by combination of both plasma radiation treatment and primer agent application.

After the ground layer is formed, oxygen gas barrier layer 31 is formed in step S4. Oxygen gas barrier layer 31 according to the present exemplary embodiment has a two-layer structure obtained by applying and drying an EVOH solution and then vapor depositing Al. Examples of a vapor deposited layer include, in addition to Al, Al₂O₃ and SiO₂.

Oxygen gas barrier layer 31 alternatively has a single-layer structure obtained by applying and drying an EVOH solution including a uniformly dispersed inorganic layered compound.

The EVOH solution is replaceable with a PVA solution to achieve an effect similar to the effect of the EVOH solution.

As described above, oxygen gas barrier layer 31 is made of oxygen gas barrier resin including a PVA layer, an EVOH layer, or the like, and a composite material including an inorganic material.

Examples of the inorganic material include an inorganic layered compound such as Al, Al₂O₃, or SiO₂.

Inner box 3 includes exhaust port 15 and exhaust pipe 16 connecting exhaust port 15 to the vacuum pump. Exhaust pipe 16 is made of polypropylene similarly to a container obtained by injection molding. Other examples of exhaust pipe 16 include a metal exhaust pipe and a glass exhaust pipe. Exhaust port 15 and exhaust pipe 16 each have an inner diameter ranging from 1 mm to 10 mm inclusive in the present exemplary embodiment, as a larger inner diameter leads to more difficult sealing. Open cell urethane foam 5 has extremely high exhaust back pressure rate, which determines entire exhaustion time. Exhaust efficiency will thus not deteriorate even in a case where the inner diameters of exhaust port 15 and exhaust pipe 16 are as small as the range from 1 mm to 10 mm.

### [Open cell urethane foam]

In step S5, a urethane solution is poured into a metal mold having a shape of the heat-insulating space provided between outer box 2 and inner box 3. The urethane solution is then foamed. In step S6, foamed urethane is removed from the metal mold to obtain open cell urethane foam 5.

Open cell urethane foam 5 includes a core layer and a skin layer covering an outer periphery of the core layer. The skin layer corresponds to a layer of a core (urethane foam) which has large resin thickness (insufficiently foamed) and is generated around an interface with a wall surface of the metal mold or the like upon urethane foaming.

Open cell urethane foam 5 will be described next in terms of a configuration.

Open cell urethane foam 5 is a member having high porosity (e.g. 95%). Open cell urethane foam 5 includes a plurality of bubbles, bubble films, and bubble structures. Each of the bubble films is a film-shaped portion provided between at least one pair of bubbles facing each other. Each of the bubble structures is provided between at least one pair of bubbles facing each other, is provided continuously to the bubble film between the pair of bubbles and another pair of bubbles facing the pair of bubbles, and causes the pair of bubbles facing each other to have a distance longer than a thickness of the bubble film.

Specifically, the bubble films are about 3 µm in thickness (a distance between a pair of bubbles) whereas the bubble structures are about 150 µm in thickness (a distance between a pair of bubbles). The bubble structures provided in the skin layer less foamed than the core layer has a ratio (a volume ratio of the bubble structures to the entire skin layer) is larger than a ratio of the bubble structures in the core layer (a volume ratio of the bubble structures to the entire core layer). An insufficiently foamed area of open cell urethane foam 5 may have a state where bubbles are dispersed in bulk resin. The bubble films and the bubble structures defined as described above are also applicable to the state. The bubble structures are assumed to mostly occupy in such a state.

According to actual thickness of the bubble films and the bubble structures, a typical bubble film will correspond to a portion including a pair of bubbles facing each other and having a distance of 3 µm or less, and a typical bubble structure will correspond to a portion including a pair of bubbles facing each other and having a distance of 150 µm or more.

In order to secure continuous air permeability among all bubbles in open cell urethane foam 5, the bubble films (preferably all the bubble films) each have a first through hole and the bubble structures each have a second through hole.

The first through hole provided in each of the bubble films can be formed by a warp generated at a molecular level when foaming at least two types of powdered urethanes having no mutual affinity and a difference in molecular weight, for example.

Examples of the at least two powdered urethanes include a mixture containing polyol of predetermined composition and polyisocyanate. First through hole 44 can be formed by reaction of these urethanes with provision of a foaming agent such as water. The first through holes can also be formed with use of calcium stearate or the like. The first through holes have an exemplary average diameter from 2 µm to 8 µm. The first through holes configure the air vents of open cell urethane foam 5.

The second through hole provided at each of the bubble structures can be formed by filling the outer package with a finely powdered material (powdered polyethylene, powdered nylon, or the like) having no affinity with (less adhesive to) the powdered urethanes and mixed with the powdered urethanes, at each interface between powders of the finely powdered material and the bubbles.

The bubbles have particle diameters of about 100 µm whereas the powders of the finely powdered material have particle diameters set to about 10 µm to 30 µm, for an optimal communication rate achieved by the second through holes. The second through holes are thus preferred to have an average diameter from 10 µm to 30 µm. The second through holes configure the air vents of open cell urethane foam 5.

As described above, the poured urethane solution includes the mixture of at least two types of powdered urethanes having no mutual affinity for formation of the first through holes in the bubble films of the foamed bubbles. The poured urethane solution further includes the mixture of the powdered urethanes and the finely powdered material having no affinity with the powdered urethanes, for formation of the second through holes in the bubble structures shaping the bubbles after urethane foaming.

PTL 5 discloses details of open cell urethane foam 5 described above.

### [Assembly]

Step S7 includes assembling outer box 2, inner box 3, and open cell urethane foam 5. Specifically, a molded article of open cell urethane foam 5 is inserted to inner box 3, and is then covered with outer box 2.

In step S8, heat and pressure are applied to an outer periphery of outer box 2 to heat weld inner box 3 and outer box 2.

In the case where the adhesive layer of inner box 3 is made of polypropylene, the polypropylene layer configuring the adhesive layer of inner box 3 is heat welded to the non-stretched polypropylene layer (CPP) configuring the adhesive layer of outer box 2.

Assume the other case where the adhesive layer of inner box 3 is configured by the gas barrier coating layer. If the adhesive layer of inner box 3 is, for example, made of Al, the Al and the ethylene-methacrylic acid copolymer are heat welded. If the adhesive layer of inner box 3 is made of EVOH, the EVOH and the modified polyolefin are heat welded.

Subsequently in step S9, exhaust pipe 16 is connected with the vacuum pump and the interior of the outer package is vacuum exhausted for a predetermined period.

Exhaust pipe 16 is then sealed in step S10. Exhaust pipe 16 is made of polypropylene configuring inner box 3, and is sealed by application of heat, or both heat and pressure.

Though not depicted, the outer package optionally contains various gas absorbents along with open cell urethane foam 5.

Typically known examples of the gas absorbents include an air absorbent that selectively absorbs air, and a moisture absorbent that absorbs moisture. Such gas absorbents absorb residual gas after vacuum exhausting, minute gas entering by permeation of inner box 3 and outer box 2 in a long period, and the like, for a continuously high degree of vacuum for a long period of time.

### [Effects]

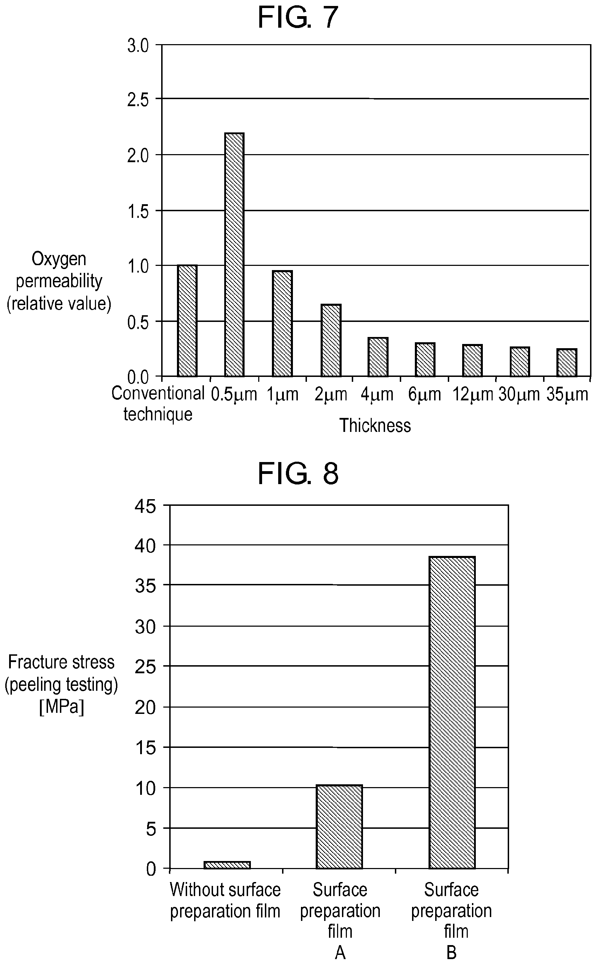

FIG. 7 is a graph indicating relation between thickness and oxygen permeability of the oxygen gas barrier layer in the vacuum heat insulator according to the first exemplary embodiment of the present disclosure. Specifically, FIG. 7 indicates a measurement result of oxygen permeability of inner box 3 in the vacuum heat insulator according to the present first exemplary embodiment.

Vacuum heat insulator 13 includes surface preparation layer 33 obtained through plasma radiation treatment and primer agent application. Vacuum heat insulator 13 further includes oxygen gas barrier layer 31 configured by an EVOH layer including a uniformly dispersed inorganic layered compound.

In such a configuration, oxygen gas barrier layer 31 according to the present disclosure achieves, even with thickness as small as 1 µm, oxygen permeability equivalent to or exceeding oxygen permeability of a vacuum molded multilayer sheet according to the conventional technique, which includes polypropylene (PP), EVOH having 300 µm in thickness, and PP. Oxygen gas barrier layer 31 also achieves significant reduction in material cost by about one tenth of the material cost of the conventional technique, while securing oxygen gas barrier performance equivalent to the oxygen gas barrier performance of the conventional technique.

Oxygen gas barrier layer 31 is 1 µm to 50 µm thick, and is preferably 1 µm to 30 µm.

Oxygen gas barrier layer 31 having thickness of 30 µm or less achieves reduction in production cost for vacuum heat insulator 13 without significant deterioration in productivity.

Oxygen gas barrier layer 31 having thickness of 30 µm or more will not exhibit further improvement in oxygen permeability. Oxygen gas barrier layer 31 is thus preferably 1 µm to 30 µm in thickness in consideration of required oxygen gas barrier performance and productivity.

Described next with reference to FIG. 8 is adhesion of oxygen gas barrier layer 31 to the outer package of vacuum heat insulator 13 according to the present disclosure.

FIG. 8 is a graph indicating a measurement result of fracture stress of the vacuum heat insulator according to the first exemplary embodiment of the present disclosure. Specifically, FIG. 8 indicates the measurement result of fracture stress at peeling testing of vacuum heat insulator 13 according to the present exemplary embodiment, including inner box 3 obtained through surface preparation or without surface preparation.

Surface preparation film A is obtained through only plasma radiation treatment, whereas surface preparation film B is obtained through plasma radiation treatment and primer agent application.

The peeling testing is applied to heat welding layer 32 provided with surface preparation layer 33 and oxygen gas barrier layer 31 as depicted in FIG. 5A. A test piece of 20 mm wide and 100 mm long is prepared for a heat welding portion provided between outer box 2 and inner box 3 and having welding width of 3.5 mm, and the peeling testing is executed with use of a tensile tester AGS-H manufactured by Shimadzu Corporation.

Surface preparation film B exhibits higher fracture stress than the case of providing no surface preparation film and the case of providing surface preparation film A. A base material for the aluminum laminated film configuring outer box 2 is fractured only in the case of providing surface preparation film B.

Accordingly, vacuum heat insulator 13 having surface preparation film B achieves improvement in adhesion of oxygen gas barrier layer 31 to the outer package.

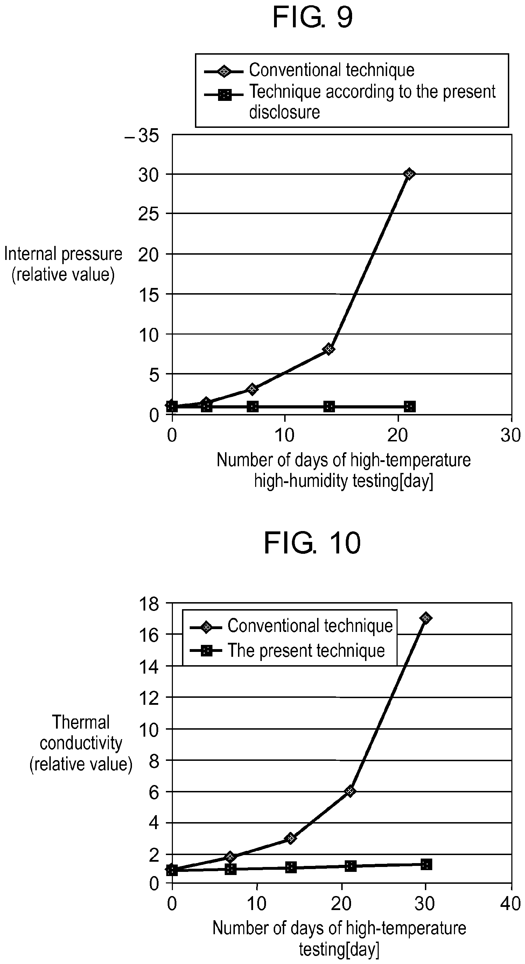

Vacuum heat insulator 13 will be described next in terms of heat insulation performance with reference to FIG. 9. FIG. 9 is a graph indicating transition of internal pressure at high-temperature high-humidity testing, of the vacuum heat insulator according to the first exemplary embodiment of the present disclosure. Specifically, FIG. 9 indicates a daily measurement result of internal pressure at high-temperature high-humidity testing at 40°C and 95% of vacuum heat insulator 13 according to the present first exemplary embodiment.

Primarily desired is direct measurement of heat insulation performance like thermal conductivity measurement. However, measurement with use of a thermal conductivity measuring apparatus or a heat flux sensor requires measuring quantity of heat vertically conducting between two planes. Accurate measurement is difficult when at least one of planes has unevenness as in the present first exemplary embodiment. The internal pressure correlated with the thermal conductivity is accordingly measured in place of heat insulation performance.

The internal pressure is measured as exemplified below. Vacuum heat insulator 13 is placed in a vacuum chamber, and the interior of the chamber is decompressed. Internal pressure of the chamber is measured with use of a laser displacement meter when the chamber has internal pressure equal to internal pressure of vacuum heat insulator 13 and outer box 2 of vacuum heat insulator 13 starts expanding. The laser displacement meter is provided in a vertical direction with respect to a plane parallel to outer box 2.

Vacuum heat insulator 13 according to the conventional technique provided with the coated EVOH layer including the inorganic layered compound uniformly dispersed, outside inner box 3, in other words, on an atmospheric pressure side, has internal pressure increased daily, to reach internal pressure 30 times as high as initial internal pressure on the 21st day of the testing. In contrast, the vacuum heat insulator according to the present disclosure provided with the coated EVOH layer including the inorganic layered compound uniformly dispersed at the innermost layer of inner box 3 on a decompression side, has internal pressure only 1.08 times as high as initial pressure even on the 21st day of the testing. The EVOH layer according to the conventional technique, which is provided on the atmospheric pressure side, absorbs moisture in a high-temperature high-humidity atmosphere to deteriorate initial oxygen gas barrier performance and allow oxygen permeation into vacuum heat insulator 13. In contrast, vacuum heat insulator 13 according to the present disclosure includes the EVOH layer as the innermost layer on the decompression side. The EVOH layer thus does not absorb moisture even in the high-temperature high-humidity atmosphere, to keep initial oxygen gas barrier performance.

As described above, provision of the EVOH layer as the innermost layer on the decompression side achieves continuous oxygen gas barrier performance.

### (Second exemplary embodiment)

### [Exemplary structure of refrigerator partition]

Described next is an exemplary structure of a partition of refrigerator 1 according to a second exemplary embodiment of the present disclosure. Partition 8 of refrigerator 1 depicted in FIG. 1 is also provided with vacuum heat insulator 13 in the second exemplary embodiment of the present disclosure.

Vacuum heat insulator 13 provided at partition 8 of refrigerator 1 can be produced in accordance with a method similar to the method according to the first exemplary embodiment. The method of producing vacuum heat insulator 13 according to the present exemplary embodiment will thus not be described in detail.

In the present exemplary embodiment, resin molding in the method of producing vacuum heat insulator 13 according to the first exemplary embodiment can be conducted by blow molding. In such a case, oxygen gas barrier layer 31 is provided as the innermost layer of blow molding. Still alternatively, open cell urethane foam 5 as the core can be injected via an inlet of a resin molded body of open cell urethane foam 5 and be foamed by integral foam molding without removal from the mold. Vacuum heat insulator 13 is obtained by vacuum exhausting via the inlet and then sealing the inlet. This method achieves simplification of production steps as well as significant reduction in capital investment.

Described next with reference to FIG. 10 is oxygen gas barrier performance of vacuum heat insulator 13 according to the present disclosure. FIG. 10 is a graph indicating transition of thermal conductivity at high-temperature testing of the vacuum heat insulator according to the second exemplary embodiment of the present disclosure.

Specifically, FIG. 10 indicates a daily measurement result of thermal conductivity at high-temperature testing at 60°C of partition 8 including vacuum heat insulator 13 according to the present second exemplary embodiment. The thermal conductivity is measured with use of a thermal conductivity measuring apparatus (auto-lambda) manufactured by EKO Instruments.

As indicated in FIG. 10, the vacuum heat insulator according to the conventional technique provided with the coated EVOH layer including the inorganic layered compound uniformly dispersed outside inner box 3, in other words, on the atmospheric pressure side, has thermal conductivity increased daily, to reach, on the 30th day of the testing, thermal conductivity 17 times as high as initial thermal conductivity. In contrast, the vacuum heat insulator according to the present disclosure, which is provided with the coated EVOH layer including the inorganic layered compound uniformly dispersed at the innermost layer of partition 8 on the decompression side, has thermal conductivity only 1.3 times as high as initial thermal conductivity even on the 30th day of the testing.

The EVOH layer according to the conventional technique, which is provided on the atmospheric pressure side, absorbs moisture also in a high-temperature atmosphere to deteriorate initial oxygen gas barrier performance and allow more oxygen permeation into vacuum heat insulator 13. In contrast, vacuum heat insulator 13 according to the present disclosure is provided with the EVOH layer configuring the oxygen gas barrier layer at the innermost layer on the decompression side. The EVOH layer thus does not absorb moisture even in the high-temperature atmosphere, to keep initial oxygen gas barrier performance.

Provision of the oxygen gas barrier layer as the inner layer, preferably as the innermost layer to be at least decompressed, of the outer package accordingly inhibits increase in thermal conductivity for continuous oxygen gas barrier performance.

### INDUSTRIAL APPLICABILITY

As described above, the present invention provides the vacuum heat insulator that is inexpensive, exhibits high heat insulation performance, and has high quality. The vacuum heat insulator is thus widely applicable to consumer appliances like refrigerators and electric hot water suppliers, vending machines, heat insulators for motor vehicles and residences, heat-insulating containers, heat-insulating walls, and the like.

### REFERENCE MARKS IN THE DRAWINGS

- 1: refrigerator
- 2: outer box (outer package)
- 3: inner box (outer package)
- 4: body
- 5: open cell urethane foam (heat-insulating material)
- 8: partition
- 9: storage chamber
- 13: vacuum heat insulator
- 14: exterior component
- 15: exhaust port
- 16: exhaust pipe (after being sealed)
- 25: refrigerator door
- 31: oxygen gas barrier layer
- 32: heat welding layer
- 33: surface preparation layer (adhesive layer)

## Claims

1. A vacuum heat insulator comprising:
an outer package having an enclosed structure; and
a core provided in the outer package,
wherein the outer package has an interior decompressed and provided with an oxygen gas barrier layer.

2. The vacuum heat insulator according to claim 1, wherein the oxygen gas barrier layer is provided as an innermost layer of the outer package.

3. The vacuum heat insulator according to claim 1 or 2, wherein the oxygen gas barrier layer is configured by a polyvinyl alcohol polymer (PVA) layer or an ethylene-vinyl alcohol copolymer (EVOH) layer.

4. The vacuum heat insulator according to any one of claims 1 to 3, wherein the oxygen gas barrier layer is made of oxygen gas barrier resin including the PVA layer or the EVOH layer, and a composite material including an inorganic material.

5. The vacuum heat insulator according to any one of claims 1 to 4, wherein the outer package is configured by a resin molded body.

6. The vacuum heat insulator according to claim 5, wherein the outer package includes an adhesive resin layer that has a functional group exhibiting adhesion improved by affinity with the oxygen gas barrier resin.

7. The vacuum heat insulator according to any one of claims 1 to 6, wherein the oxygen gas barrier layer includes at least two stacked oxygen gas barrier layers.

8. The vacuum heat insulator according to any one of claims 1 to 7, wherein the oxygen gas barrier layer is 1 µm to 50 µm in thickness.

9. The vacuum heat insulator according to any one of claims 1 to 8, wherein the outer package includes at least one of an air absorbent or a moisture absorbent.

10. A heat-insulating container comprising the vacuum heat insulator according to any one of claims 1 to 9.

11. A heat-insulating wall comprising the vacuum heat insulator according to any one of claims 1 to 9.

12. A refrigerator comprising the vacuum heat insulator according to any one of claims 1 to 9.
